# EUROPEAN PATENT APPLICATION

(11) **EP 4 614 462 A1**
(43) Date of publication of application: **10.09.2025**
(21) Application number: 25157465.3
(22) Date of filing: 12.02.2025
(51) Int. Cl.: G06V 20/56, G06V 20/58

(54) **REMOTE SUPPORT DEVICE AND REMOTE SUPPORT METHOD**

(30) Priority: 08.03.2024 JP 2024035734
(71) Applicant: TOYOTA JIDOSHA KABUSHIKI KAISHA, Toyota-shi, Aichi-Ken, 471-8571 (JP)
(72) Inventor: SUDA, Rio, Aichi-ken, 471-8571 (JP); TAMAGAWA, Shuichi, Aichi-ken, 471-8571 (JP); AKATSUKA, Kosuke, Aichi-ken, 471-8571 (JP)
(74) Representative: D Young & Co LLP

(57) **Abstract**

When an object to be noted in an image IMG1 is a moving body, projection transformation of a partial image OBJ1 of the moving body included in the image IMG1 used for a recognition of the moving body is performed. According to the projection transformation of the partial image OBJ1, a partial image OBJ2 obtained at a camera viewpoint ahead of an acquisition timing T1 of the image IMG1 including the partial image OBJ1 by an object movement adjustment time α is generated. A synthetic image SIMG1 is generated based on the partial image OBJ2, the image IMG1 in which the partial image OBJ1 is included and recognition information OR of the moving body in the image IMG1, and is output from a display device.

## Description

### TECHNICAL FIELD

The present disclosure relates to a technique for remotely supporting a mobile vehicle using an image acquired by a camera mounted on the mobile vehicle.

### BACKGROUND

JP2022159912A discloses a system for remotely monitoring a vehicle. In this system of the related art, first data and second data are separately transmitted from the vehicle to a remote server. The first data includes an image (a camera image) acquired by a camera mounted on the vehicle and acquisition timing of the camera image. The second data includes an object recognition result based on the camera image and an acquisition timing of the camera image. In the remote server, based on the acquisition timing of the camera image included in the first and second data, the camera image acquired at the same timing and the object recognition result based on the camera image are extracted in time series. Then, a synthetic image in which the object recognition result is superimposed on the extracted camera image is output from a remote monitoring screen.

In the system of the related art, a difference between the acquisition timing of the camera image that is the source of the object recognition result and a timing at which the object recognition result is able to be processed by the remote server can be said to be a delay time of the object. The problem here is that the object is a moving body such as a walker, bicycle, or other vehicle. That is, when a movement amount of the moving body within the delay time of the object is large, position and size of the moving body in the synthetic image greatly deviate from actual position and size of the moving body. In this case, accuracy of the information output from the remote monitoring screen is reduced.

The present disclosure has been made in view of the above problems. An object of the present disclosure is to provide a technique for suppressing a large deviation of position and size of the moving body in the synthetic image from actual position and size when a camera image and an object recognition result are separately received from a mobile vehicle and remote support of the mobile vehicle is performed.

### SUMMARY

A first aspect of the present disclosure is a device for remotely supporting a mobile vehicle and has the following features.

The device is configured to remotely support the mobile vehicle by outputting a synthetic image in which annotation information about an object to be noted in an image is superimposed on the image obtained by a camera mounted on the mobile vehicle from a display device.

The device includes a communication circuitry and a processing circuitry. The communication circuitry is connected to the mobile vehicle via a communication network. The processing circuitry is coupled to the communication circuitry.

The communication circuitry is configured to: receive, from the mobile vehicle, image data obtained by encoding the image and information on acquisition timing of the image by the camera; and receive, from the mobile vehicle, object data including recognition information on an object in the image separately from the image data.

The processing circuitry is configured to: when the object is a moving body, predict a movement amount of the moving body at an object delay time indicating a timing difference between an acquisition timing of the image used for recognizing the moving body and a reception timing of the object data including recognition information on the moving body by the processing circuitry; set an object movement adjustment time which is monotonic non-decreasing with respect to an increase in the predicted movement amount of the moving body; perform projection transformation of a partial image of the moving body, which is included in the image included in the image data and used for the recognition of the moving body, into a future image obtained at a camera viewpoint earlier than the acquisition timing of the image by the image delay compensation time based on information on a relative movement of the moving body with respect to the mobile vehicle; and generate the synthetic image based on the future partial image, an original image in which an original partial image of the future partial image is included, and recognition information on the moving body in the original image.

A second aspect of the present disclosure is a method for remotely supporting a mobile vehicle and has the following features.

The method includes remotely supporting the mobile vehicle by outputting, from a display device, a synthetic image in which annotation information about an object to be noted in an image is superimposed on the image obtained by a camera mounted in the mobile vehicle.

The method includes: receiving image data in which the image and information on acquisition timing of the image by the camera are encoded from the mobile vehicle; receiving object data including recognition information on an object in the image from the mobile vehicle separately from the image data; setting an object movement adjustment time which is monotonic non-decreasing with respect to an increase in the predicted movement amount of the moving body; performing projection transformation of a partial image of the moving body, which is included in the image included in the image data and used for the recognition of the moving body, into a future image obtained at a camera viewpoint earlier than the acquisition timing of the image by the image delay compensation time based on information on a relative movement of the moving body with respect to the mobile vehicle; and generating the synthetic image based on the future partial image, an original image in which an original partial image of the future partial image is included, and recognition information on the moving body in the original image.

According to the present disclosure, when the object is a moving body, the projection transformation is performed on a partial image of the moving body included in the image included in the image data and used for recognizing the moving body. According to the projection transformation of the partial image, a future partial image is obtained at a camera viewpoint that is earlier than the acquisition timing of the image including the partial image by the object movement adjustment time. In addition, according to the present disclosure, the synthetic image is generated based on the future partial image, the original image including the original partial image of the future partial image, and the recognition information on the moving body in the original image. Therefore, even when the movement amount of the moving body in the object delay time is large, it is possible to suppress the position and size of the moving body in the synthetic image from greatly deviating from the actual position and size.

### BRIEF DESCRIPTION OF DRAWINGS

FIG. 1 is a schematic diagram illustrating a configuration example of a remote support system;
FIG. 2 is a diagram illustrating an example of data transmission from a vehicle to a remote operator terminal;
FIG. 3 is a diagram illustrating an example of a synthetic image output from a display device;
FIG. 4 is a diagram for illustrating a delay time of an object;
FIG. 5 is a conceptual diagram for illustrating an outline of movement adjustment processing of an image of a moving body;
FIG. 6 is a conceptual diagram for illustrating projection transformation based on perspective projection transformation;
FIG. 7 is a diagram illustrating a second example of a movement adjustment time;
FIG. 8 is a diagram illustrating a third example of the movement adjustment time;
FIG. 9 is a diagram illustrating a fourth example of the movement adjustment time;
FIG. 10 is a diagram illustrating an example of a synthetic image output from the display device when projection transformation is performed on an image of a moving body;
FIG. 11 is a diagram for illustrating a preferred example of generation processing of the synthetic image;
FIG. 12 is a diagram for illustrating a preferred example of generation processing of the synthetic image;
FIG. 13 is a block diagram illustrating a configuration example of a vehicle; and
FIG. 14 is a block diagram illustrating an example of a configuration of a remote operator terminal.

### DESCRIPTION OF EMBODIMENT

An embodiment of the present disclosure will be described with reference to the accompanying drawings.

### 1. Remote support system

A remote support (a remote driving) of a mobile vehicle will be considered. Examples of the mobile vehicle to be remotely supported include a vehicle, a robot, and a flying object. The vehicle may be an autonomous driving vehicle, or a vehicle driven by a driver. Examples of the robot include a logistics robot and a work robot. Examples of the flying object include a drone or the like. As an example, in the following description, a case where the mobile vehicle is a vehicle will be considered. In the case of generalization, "vehicle" in the following description is replaced with "mobile vehicle".

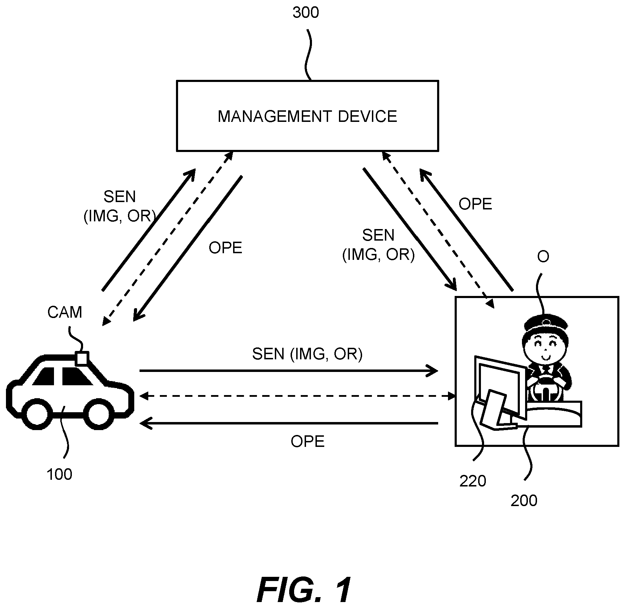

FIG. 1 is a schematic diagram illustrating a configuration example of a remote support system 1 according to the present embodiment. The remote support system 1 includes a vehicle 100, a remote operator terminal 200, and a management device 300. The vehicle 100 is a target of the remote support. The remote operator terminal 200 is a terminal device used when a remote operator O remotely supports the vehicle 100. The remote operator terminal 200 may be referred to as a remote support human machine interface (HMI). The management device 300 manages the remote support system 1. Typically, the management device 300 is a management server on a cloud. The management server may be configured by a plurality of servers that perform distributed processing.

The vehicle 100, the remote operator terminal 200, and the management device 300 can communicate with each other via a communication network. The vehicle 100 and the remote operator terminal 200 may communicate with each other through the management device 300. The vehicle 100 and the remote operator terminal 200 may directly communicate with each other without the management device 300.

Various sensors including a camera CAM are mounted on the vehicle 100. The camera CAM captures an image of surroundings of the vehicle 100 and acquires an image IMG showing a situation around the vehicle 100. Information on sensor detection SEN includes information obtained by the various sensors. The information on sensor detection SEN includes at least the image IMG captured by the camera CAM and recognition information OR on an object to be noted in the image IMG. The information on sensor detection SEN may include a position and a state (e.g., speed, steering angle, etc.) of the vehicle 100. The vehicle 100 transmits information on sensor detection SEN to the remote operator terminal 200.

The remote operator terminal 200 receives the information on sensor detection SEN transmitted from the vehicle 100. The remote operator terminal 200 presents the information on sensor detection SEN to the remote operator O. Specifically, the remote operator terminal 200 includes a display device 220, and displays information such as the image IMG on the display device 220. The remote operator O recognizes the situation around the vehicle 100 by viewing the displayed information, and performs the remote support of the vehicle 100. That is, the remote support of the vehicle 100 by the remote operator O is performed by displaying the information on the remote operator O on the display device 220.

Remote support information OPE is information on the remote support by the remote operator O. For example, the remote support information OPE includes an operation amount by the remote operator O. The remote operator terminal 200 transmits the remote support information OPE to the vehicle 100. The vehicle 100 receives the remote support information OPE transmitted from the remote operator terminal 200. The vehicle 100 performs vehicle travel control in accordance with the received remote support information OPE. In this way, the remote support of the vehicle 100 is realized.

### 2. Generation processing of synthetic image

In the present embodiment, a synthetic image SIMG is generated in the remote operator terminal 200. The synthetic image SIMG is generated based on the image IMG included in the information on sensor detection SEN and the recognition information OR on the object to be noted in the image IMG. The image IMG and the recognition information OR are separately transmitted from the vehicle 100 to the remote operator terminal 200.

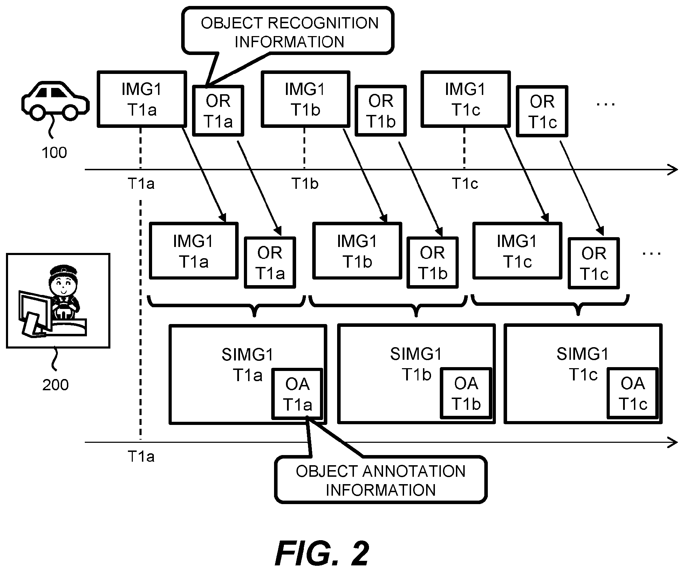

FIG. 2 is a diagram illustrating an example of transmission of the image IMG and the recognition information OR from the vehicle 100 to the remote operator terminal 200. Image data including a set of images IMG (i.e., video) acquired within a certain time is transmitted from the vehicle 100 to the remote operator terminal 200. The certain time corresponds to a transmission interval of the image data. In the example shown in FIG. 2, the set of images IMG1 acquired at the timing T1 includes images IMG1 (T1a), IMG1 (T1b), and IMG1 (T1c). The images IMG1 (T1a), IMG1 (T1b) and IMG1 (T1c) are acquired at the timings T1a, T1b, and T1c, respectively.

The recognition processing of the object is performed on each of the images IMG1 (T1a), IMG1 (T1b) and IMG1 (T1c). For the recognition processing, an image analysis technique such as pattern matching or deep learning is used. When the recognition processing is performed, recognition information OR (T1a), OR (T1b) and OR (T1c) are generated. The recognition information OR includes timing (e.g., a time stamp) at which the image IMG1 subjected to the recognition processing is acquired by the camera CAM. When an object to be noted is recognized in the image IMG1, coordinates, size, and type of the object in the image IMG1 are added to the recognition information OR. That is, when the object to be noted is not recognized in the image IMG1, the recognition information OR includes only the timing information (the time stamp).

The object data including the recognition information OR is transmitted from the vehicle 100 to the remote operator terminal 200. The transmission of the object data is performed each time the recognition information OR is generated. The transmission of the object data may be performed at regular time intervals. The regular time corresponds to a transmission interval of the object data.

The remote operator terminal 200 that has received the image data, and the object data arranges the images IMG1 (i.e., the images IMG1 (T1a), IMG1 (T1b), and IMG1 (T1c)) in chronological order based on the timing (the time stamp) at which the images IMG1 included in the image data are acquired by the camera CAM. The remote operator terminal 200 also specifies an image IMG1 to be combined with the recognition information OR based on the timing (the time stamp) included in the recognition information OR on the object.

The remote operator terminal 200 further refers to the coordinates, size, and type of the object included in the recognition information OR on the object, and superimposes annotation information OA on the image IMG1 to be combined with the object. The annotation information OA is information indicating the position, size, and type of the object in the image IMG1. The information indicating the position and size of the object is a bounding box surrounding the object. The information indicating the type of the object is a character indicating the type.

The annotation information OA is superimposed on the image IMG1, and thus the synthetic image SIMG1 is generated. Since the original images IMG1 (i.e., the images IMG1 (T1a), IMG1 (T1b), and IMG1 (T1c)) of the synthetic image SIMG1 are arranged in chronological order, a set of the synthetic image SIMG1 (i.e., the video) is output from the display device 220 by outputting the synthetic image in chronological order.

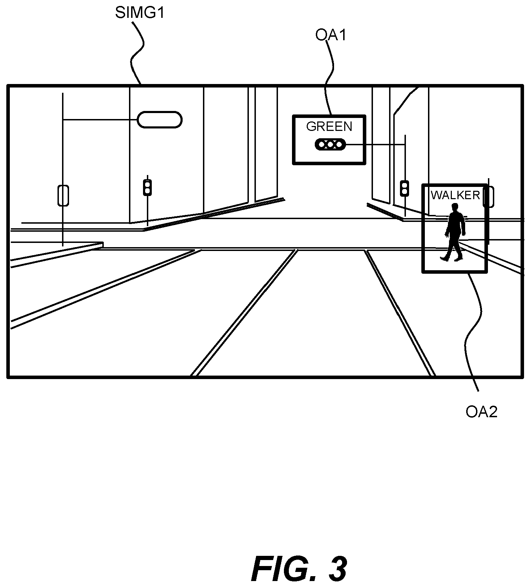

FIG. 3 is a diagram showing an example of the synthetic image SIMG output from the display device 220. In the example shown in FIG. 3, annotation information OA1 and OA2 are output. The annotation information OA1 is a bounding box surrounding a green light and characters "green light". The annotation information 2 is a bounding box surrounding a walker and characters "walker".

### 3. Processing using projection transformation

The remote support of the vehicle 100 is accompanied by a delay between the vehicle 100 and the remote operator terminal 200. A difference between the timing T1 at which the image IMG1 in which the object to be noted is recognized is acquired by the camera CAM and a timing at which the recognition information OR is able to be processed by the remote operator terminal 200 can be said to be a delay time of the object.

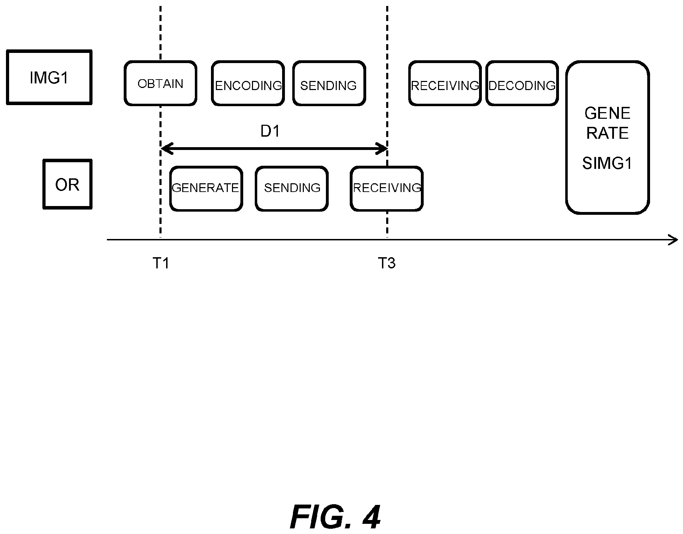

FIG. 4 is a diagram for illustrating the delay time of the object. In the example shown in FIG. 4, after the image IMG1 is acquired at the timing T1, it is encoded and then sent to the remote operator terminal 200. The reason for encoding the image is to reduce the communication cost. The encoded image IMG1 is received by the remote operator terminal 200 and then decoded. Thus, the image IMG1 is able to be processed by the remote operator terminal 200.

On the other hand, the recognition information OR is transmitted to the remote operator terminal 200 after being generated. Therefore, the recognition information OR is able to be processed by the remote operator terminal 200 at a timing T3 when the remote operator terminal 200 receives the recognition information OR. Therefore, the delay time of the object is represented as a timing difference D3 (=T3-T1) between the timing T3 and the timing T1.

The synthetic image SIMG1 is generated at a timing after the timing T3 and at a timing at which the image IMG1 is able to be processed by the remote operator terminal 200. Here, a case where the object is a moving body such as a walker, bicycle, or another vehicle will be considered. In the case where the object is a moving body, when a movement amount of the moving body within the delay time of the object is large, position and size of the moving body in the synthetic image SIMG1 greatly deviate from actual position and size of the moving body.

Therefore, in the present embodiment, a movement amount Lo of the moving body within the delay time of the object (the timing difference D1) is predicted. Then, based on the movement amount Lo, a visual adjustment is performed on the image of the moving body included in the image IMG1. In particular, the remote support system 1 according to the present embodiment adjusts the image of the moving body included in the image IMG1 by using "projection transformation". A subject of the movement adjustment processing of the moving body is, for example, the remote operator terminal 200. However, the subject of the movement adjustment processing is not limited to the remote operator terminal 200. At least a part of the movement adjustment processing may be executed by the vehicle 100 or the management device 300.

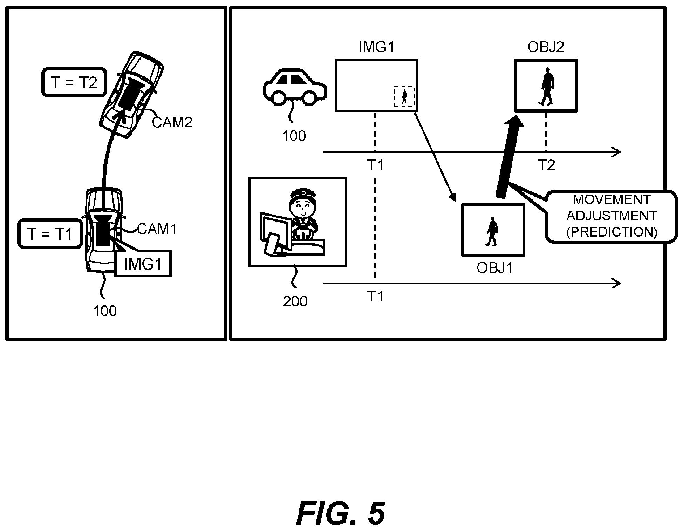

FIG. 5 is a conceptual diagram for illustrating an outline of the movement adjustment processing of the image of the moving body by the remote support system 1. The image IMG1 is an image IMG actually captured at the timing T1 by the camera CAM mounted on the vehicle 100. The image IMG1 is transmitted from the vehicle 100 to the remote operator terminal 200. The remote operator terminal 200 acquires the image IMG1 after the timing T1. If an image IMG to be captured in the future can be predicted from the image IMG1, the movement adjustment can be performed.

The timing T2 is a timing that is a target of prediction, and is a timing after the timing T1. A difference between the timing T2 and the timing T1 corresponds to the "movement adjustment time". The remote support system 1 sets a time α equal to or less than the timing difference D1 shown in FIG. 4 as the movement adjustment time of the moving body (object movement adjustment time). In the first example, the time α is set to a time equal to the timing difference D1. According to the first example, the position and size of the moving body may be adjusted by the movement amount Lo within the movement adjustment time.

For convenience, the camera CAM at the timing T1 is referred to as a first camera CAM1, and the camera CAM at the timing T2 is referred to as a second camera CAM2. A first viewpoint is a viewpoint of the first camera CAM1 and is defined by a combination of the position and the direction of the first camera CAM1 at the timing T1. A second viewpoint is a viewpoint of the second camera CAM2 and is defined by a combination of the position and the direction of the second camera CAM2 predicted at the timing T2.

The remote support system 1 acquires camera information CINF regarding the camera CAM mounted on the vehicle 100. The camera information CINF includes installation information and performance information on the camera CAM. The installation information indicates an installation position and an installation orientation of the camera CAM in a vehicle coordinate system. The performance information indicates a focal length, an angle of view, and the like of the camera CAM. Since the camera CAM is fixed to the vehicle 100, a movement direction and a movement amount of the vehicle 100 can be converted into the movement direction and the movement amount of the camera CAM in the camera coordinate system by using the installation information on the camera CAM. That is, a change in viewpoints of the camera CAM can be estimated based on the installation information on the camera CAM and the movement direction and the movement amount of the vehicle 100.

More specifically, the remote support system 1 acquires information regarding a relative movement (a relative movement direction and a relative movement amount) of the moving body to the vehicle 100 in a period from the timing T1 to the timing T2 (i.e., the object movement adjustment time). For example, the remote support system 1 estimates the relative movement direction and the relative movement amount of the moving body from the timing T1 to the timing T2 by optical flow. Information on the speed and steering angle of the vehicle 100 may be obtained from information on sensor detection SEN provided from the vehicle 100. Alternatively, the steering angle in the steering operation by the remote operator O may be regarded as the steering angle of the vehicle 100. It may be assumed that the vehicle 100 makes a steady circular turn. Then, the remote support system 1 calculates a difference between the first viewpoint and the second viewpoint based on the camera information CINF (the installation information) and the movement amount and the movement direction of the vehicle 100 in the image delay compensation time.

The image IMG1 is an image IMG actually captured at the timing T1 by the camera CAM mounted on the vehicle 100. The image IMG1 is transmitted from the vehicle 100 to the remote operator terminal 200. The remote operator terminal 200 extracts a partial image OBJ1 of the moving body from the image IMG1 acquired after the timing T1 based on the recognition information OR. Then, a partial image (future partial image) OBJ2 of the moving body to be captured in the future is predicted from the partial image OBJ1 using projection transformation. The projection transformation is used for this prediction.

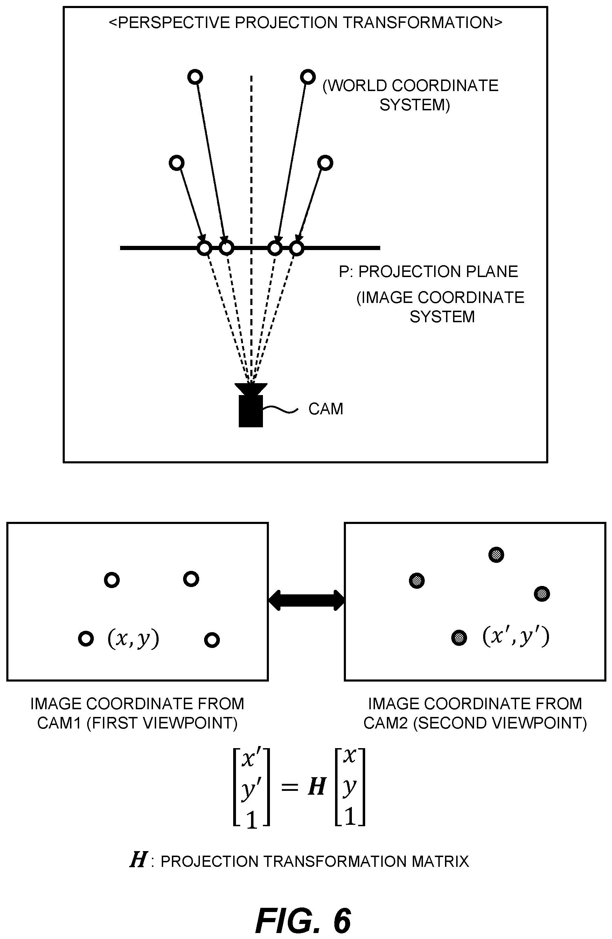

FIG. 6 is a conceptual diagram for illustrating the projection transformation. The projection transformation is performed based on the perspective projection transformation. The perspective projection transformation is a rendering method for drawing an object in a three-dimensional space on a two-dimensional plane as viewed from the camera CAM. For that purpose, the perspective projection transformation projects the points in the three-dimensional space onto the projection plane P, taking into account the viewpoint of the camera CAM. The projection plane P is associated with the camera CAM. For example, the projection plane P is a plane orthogonal to the optical axis of the camera CAM. Note that a point in the three-dimensional space is defined in a three-dimensional world coordinate system (absolute coordinate system). On the other hand, the point projected on the projection plane P is defined in a two-dimensional image coordinate system.

For example, N virtual points are virtually set in the three-dimensional world coordinate system. N is an integer of 4 or more. The N virtual points when viewed from the first camera CAM1 (the first viewpoint) are projected to a first projection P1 associated with the first camera CAM1 by the perspective projection transformation. In addition, the N virtual points when viewed from the second CAM2 (the second viewpoint) are projected to a second projection plane P2 associated with the second camera CAM2 by the perspective projection transformation. The second viewpoint is obtained from the difference between the first viewpoint and the second viewpoint. Image coordinates of a virtual point on the first projection plane P1 as viewed from the first camera CAM1 (the first viewpoint) are given by [x, y]. On the other hand, image coordinates of a virtual point on the second projection plane P2 as viewed from the second camera CAM2 (the second viewpoint) are given by [x', y']. Based on the comparison between the two image coordinates, a projection transformation matrix H for transforming the first viewpoint to the second viewpoint is calculated. Then, the projection transformation matrix H is applied to an entire of the image CAM1 actually captured by the first camera IMG1, thereby generating the image IMG2 expected to be viewed from the second viewpoint.

As another example, a method described in a non-patent literature (Koudai Matsubara and Manabu Omae, "Compensation of Camera Image Latency in Remotely Operated Vehicle using Projection Transformation", 19th ITS Symposium 2021,4-A-12, December 2021) may be used. In particular, each image coordinate point on an image IMG1 (a projection plane P) is transformed into a world coordinate point in the world coordinate system by an inverse transformation of the perspective projection transformation. Based on the difference between the first viewpoint and the second viewpoint, the world coordinate point viewed from the first viewpoint is converted into the world coordinate point viewed from the second viewpoint. Then, the world coordinate point viewed from the second viewpoint is returned onto the projection plane P by perspective projection transformation. Thus, an image IMG2 expected to be viewed from the second viewpoint is generated. According to the non-patent literature, it is assumed that what is reflected in the entire image IMG is the ground surface S as shown in FIG. 6.

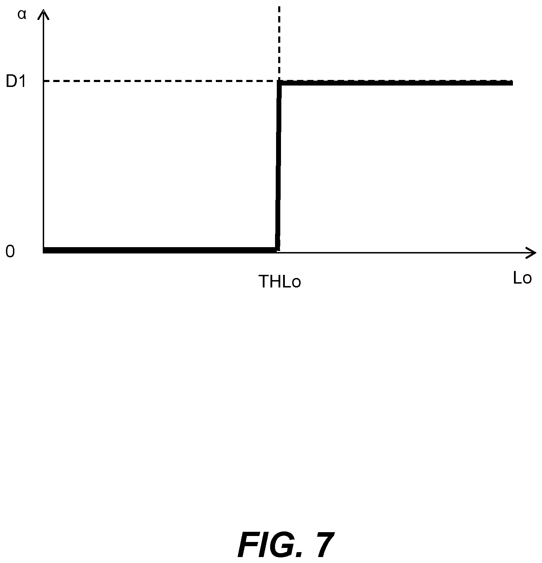

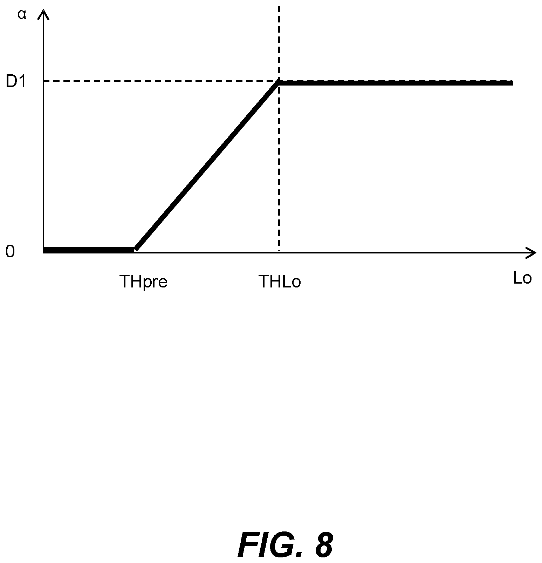

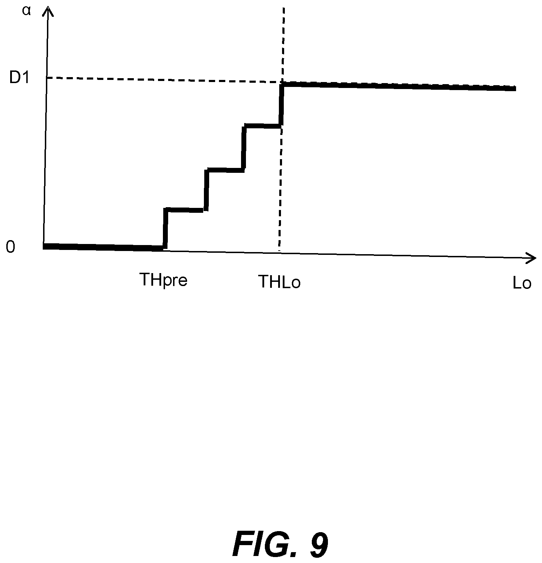

FIGS. 7 to 9 are diagrams illustrating second to fourth examples of the movement adjustment time. In the second example shown in FIG. 7, the time α is set to a time at which the time α is equal to the timing difference D1 only when the movement amount Lo is larger than a threshold THLo. According to the second example, it is possible to perform the movement adjustment processing only when the position and size of the moving body in the synthetic image SIMG1 are likely to deviate. In the third example shown in FIG. 8 and the fourth example shown in FIG. 9, the time α is gradually changed (monotonic non-decreasing) from a preliminary threshold THpre (<THLo) to the threshold THLo.

In the second example, when the movement amount Lo changes so as to cross the threshold THLo, the execution of the movement adjustment processing is switched. Therefore, the position and size of the moving body may suddenly change before and after the execution of the movement adjustment processing, and the image of the moving body becomes unstable. In this regard, in the third and fourth examples, the time α is gradually changed, and thus it is possible to stabilize the images of the moving body before and after the execution of the movement adjustment processing.

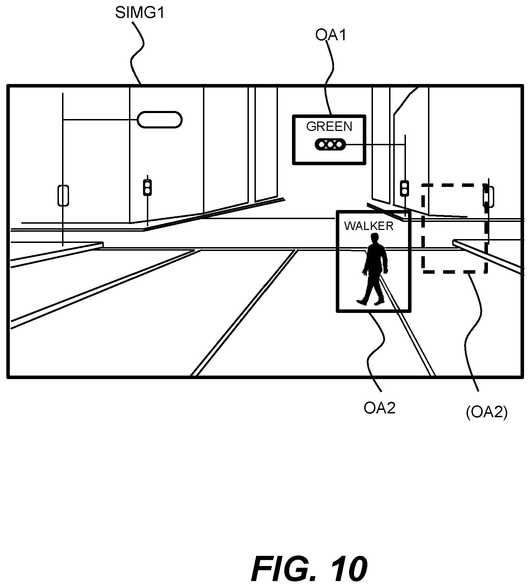

FIG. 10 is a diagram illustrating an example of the synthetic image SIMG1 output from the display device 220 when the projection transformation is performed on the image of the moving body. The synthetic image SIMG1 shown in FIG. 10 is generated based on the image IMG1 and the partial image OBJ2. The annotation information OA1 and OA2 shown in FIG. 10 are the same as those described in FIG. 3. What is important in the description of FIG. 10 is that the position and size (solid line) of the annotation information OA2 (the walker) are different from the position and size (broken line) of the annotation information OA2 in FIG. 3. This is because the projection transformation is performed on the partial image of the moving body.

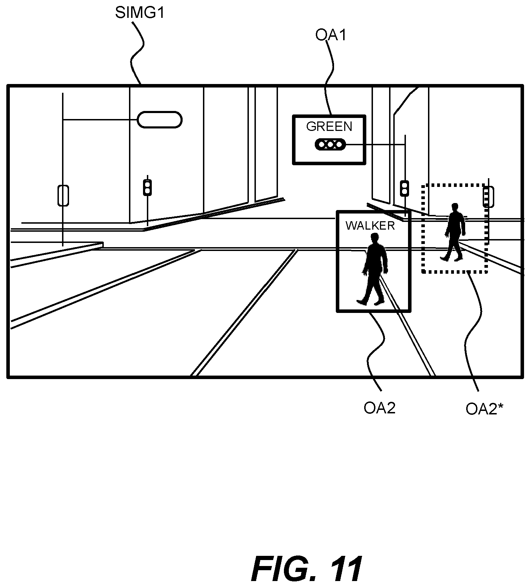

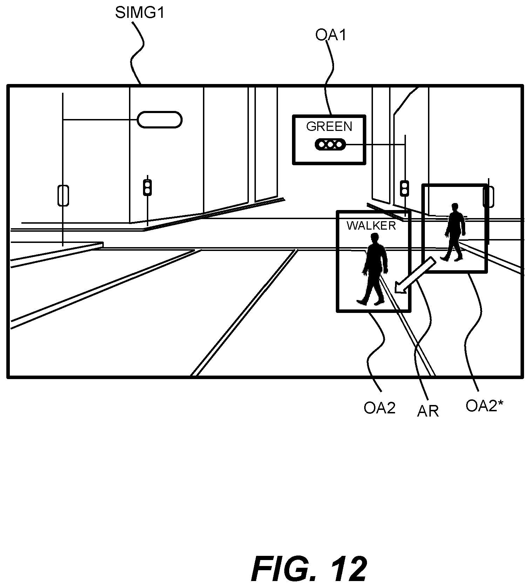

FIGS. 11 and 12 are diagrams for illustrating a preferred example of generation processing of the synthetic image SIMG1. Each of the synthetic image SIMG1 shown in FIGS. 11 and 12 is generated based on the image IMG1, the partial image OBJ1, and the partial image OBJ2, respectively. Therefore, the synthetic image SIMG1 includes a partial image before the projection transformation (i.e., the partial image OBJ1) and a partial image after the projection transformation (i.e., the partial image OBJ2). As described above, since two types of partial images are included in the synthetic image SIMG1, the remote operator O can easily predict a trajectory of the moving body.

However, the simultaneous output of two kinds of the partial images may confuse the remote operator O. Therefore, in the example shown in FIG. 11, the display color of the annotation information OA2 added to the partial image after the projection transformation (e.g., the color of the bounding box surrounding the walker) is different from that of the annotation information OA2* added to the partial image before the projection transformation. In the example illustrated in FIG. 12, an augmented reality graphic AR that links the annotation information OA2* attached to the partial image before the projection transformation and the annotation information OA2 attached to the partial image after the projection transformation is superimposed on the synthetic image SIMG1.

### 4. Configuration example of vehicle

### 4-1. Configuration example

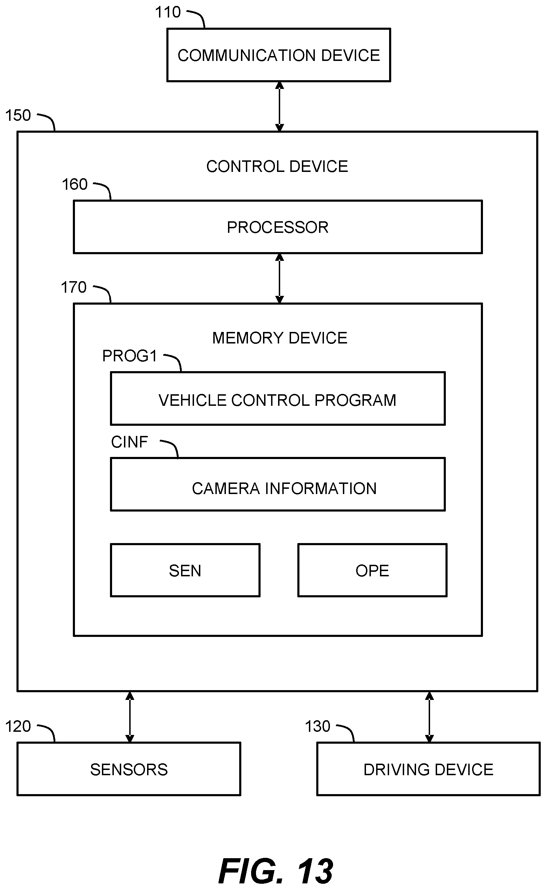

FIG. 13 is a block diagram showing a configuration example of the vehicle 100. The vehicle 100 includes a communication device 110, sensors 120, a driving device 130, and a control device 150.

The communication device 110 communicates with the outside of the vehicle 100. For example, the communication device 110 communicates with the remote operator terminal 200 or the management device 300.

The sensors 120 include a recognition sensor, a vehicle state sensor, a position sensor, and the like. The recognition sensor recognizes (detects) a situation around the vehicle 100. Examples of the recognition sensor include the camera CAM, a laser imaging detection and ranging (LIDAR), and a radar. The vehicle state sensor detects a state of the vehicle 100. The vehicle state sensor includes a speed sensor, an acceleration sensor, a yaw rate sensor, a steering angle sensor, and the like. The position sensor detects the position and the orientation of the vehicle 100. For example, the position sensor includes a GNSS sensor.

The driving device 130 includes a steering device, a driving device, and a braking device. The steering device steers the wheels. For example, the steering device includes an electric power steering (EPS) device. The driving device is a power source that generates a driving force. Examples of the driving device include an engine, an electric motor, and an in-wheel motor. The braking device generates a braking force.

The control device 150 is a computer that controls the vehicle 100. The control device 150 includes one or more processors 160 (hereinafter, simply referred to as a "processor 160") and one or more memory devices 170 (hereinafter, simply referred to as a "memory device 170"). The processor 160 executes various processes. Examples of the processor 160 include a general-purpose processor, a special-purpose processor, a central processing unit (CPU), a graphics processing unit (GPU), an application specific integrated circuit (ASIC), a field-programmable gate array (FPGA), an integrated circuit, and / or combinations thereof. The memory device 170 stores various information. Examples of the memory device 170 include a volatile memory, a nonvolatile memory, a hard disk drive (HDD), and a solid state drive (SSD). The control device 150 may include one or more electronic control units (ECUs). In general, the control device 150 may also be referred to as processing circuitry.

The vehicle control program PROG1 is a computer program executed by the processor 160. The function of the control device 150 may be implemented by cooperation between the processor 160 that executes the vehicle control program PROG1 and the memory device 170. The vehicle control program PROG1 is stored in the memory device 170. Alternatively, the vehicle control program PROG1 may be recorded in computer-readable recording media.

### 4-2. Information on sensor detection

The control device 150 acquires the information on sensor detection SEN using the sensors 120. The information on sensor detection SEN is stored in the memory device 170. The information on sensor detection SEN includes the image IMG, vehicle status information, positional information, object information, and the like. The image IMG is captured by the camera CAM. The vehicle status information indicates the state (e.g., speed, steering angle, etc.) of the vehicle 100 detected by the vehicle state sensor. The positional information indicates the position and orientation of the vehicle 100 detected by the position sensor.

The object information is information about an object around the vehicle 100. Examples of the object around the vehicle 100 include a walker, a bicycle, a two wheeled vehicle, other vehicle (a preceding vehicle, a parallel driving vehicle, a following vehicle, and the like), a white lane, road construction (e.g., a curbstone, a guard rail), a pole, a traffic light, a mark, and the like. The control device 150 may recognize an object around the vehicle 100 by using the recognition sensor. For example, by analyzing the image IMG, an object can be identified and the relative position of the object can be calculated. In addition, it is also possible to identify an object based on the point group information obtained by the LIDAR and acquire the relative position and the relative speed of the object. The object information includes a relative position of the object with respect to the vehicle 100. The object information may further include a relative speed of the object.

### 4-3. Vehicle travel control

The control device 150 executes vehicle travel control for controlling the travel of the vehicle 100. The vehicle travel control includes steering control, drive control, and braking control. The control device 150 may perform vehicle driving control by controlling the driving device 130 (e.g., a steering device, a driving device, and a braking device).

The control device 150 may perform autonomous driving control based on the information on sensor detection SEN. More specifically, the control device 150 generates a driving plan of the vehicle 100 based on the information on sensor detection SEN. Further, the control device 150 generates a target trajectory required for the vehicle 100 to travel in accordance with the travel plan based on the information on sensor detection SEN. The target trajectory includes a target position and a target speed. Then, the control device 150 performs vehicle travel control so that the vehicle 100 follows the target trajectory.

### 4-4. Processing related to the remote support

When the remote support of the vehicle 100 is performed, the control device 150 communicates with the remote operator terminal 200 through the communication device 110.

The control device 150 transmits at least a part of the information on sensor detection SEN to the remote operator terminal 200. Typically, the control device 150 transmits the image IMG to the remote operator terminal 200. The control device 150 may transmit the vehicle status information to the remote operator terminal 200. The control device 150 may transmit the object information to the remote operator terminal 200.

The control device 150 receives the remote support information OPE from the remote operator terminal 200. The remote support information OPE is information on remote support by the remote operator O. For example, the remote support information OPE includes an operation amount by the remote operator O. The control device 150 performs the vehicle travel control in accordance with the received remote support information OPE.

### 4-5. Camera information

The camera information CINF includes installation information and performance information on each of one or more camera CAMs mounted on the vehicle 100. The installation information indicates the installation position and the installation orientation of the camera CAM in the vehicle coordinate system. The performance information indicates the focal length, the angle of view, and the like of the camera CAM. The camera information CINF is stored in the memory device 170. The control device 150 may transmit the camera information CINF to the remote operator terminal 200.

### 5. Configuration example of the remote operator terminal

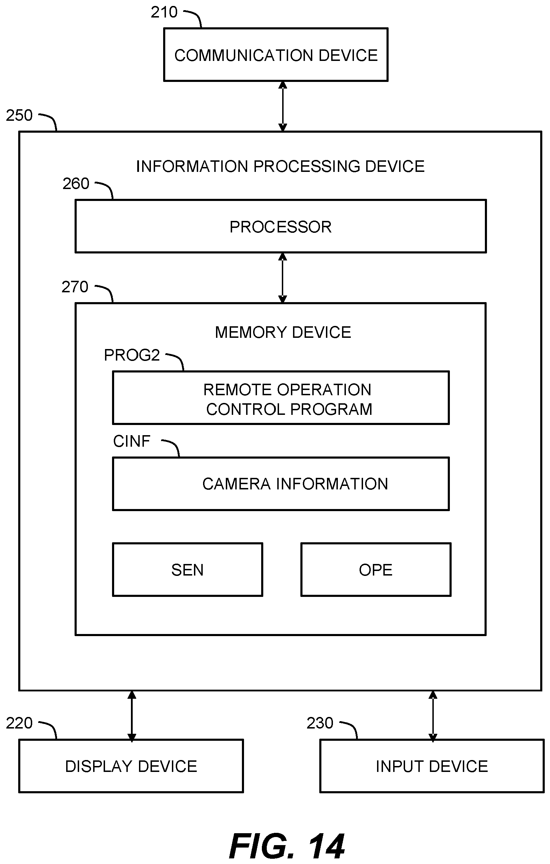

FIG. 14 is a block diagram illustrating an example of a configuration of the remote operator terminal 200. The remote operator terminal 200 includes a communication device 210, a display device 220, an input device 230, and an information processing device 250.

The communication device 210 may communicate with the vehicle 100 and the management device 300.

The display device 220 displays various information on the remote operator O performing the remote support. In other words, the display device 220 presents the various information to the remote operator O by displaying the various information.

The input device 230 is a member operated by the remote operator O when the remote operator O remotely supports the vehicle 100. For example, the input device 230 may include remote support members. Remote support members include a steering wheel, a gas pedal, a brake pedal, a turn signal, etc.

The information processing device 250 controls the remote operator terminal 200. The information processing device 250 includes one or more processors 260 (hereinafter, simply referred to as a "processor 260") and one or more memory devices 270 (hereinafter, simply referred to as a "memory device 270"). The processor 260 executes various processing. Examples of the processor 260 include a general purpose processor, an application specific processor, a CPU, a GPU, an ASIC, an FPGA, an integrated circuit, and / or combinations thereof. The memory device 270 stores various information. Examples of the memory device 270 include a volatile memory, a nonvolatile memory, an HDD, and an SSD. In general, the information processing device 250 may be referred to as processing circuitry.

The remote support control program PROG2 is a computer program executed by the processor 260. The processor 260 that executes the remote support control program PROG2 and the memory device 270 may cooperate to implement the function of the information processing device 250. The remote support control program PROG2 is stored in the memory device 270. Alternatively, the remote support control program PROG2 may be recorded in computer-readable recording media. The remote support control program PROG2 may be provided via a network.

The information processing device 250 communicates with the vehicle 100 via the communication device 210. The information processing device 250 receives the information on sensor detection SEN transmitted from the vehicle 100. The information processing device 250 presents necessary information in the received information on sensor detection SEN to the remote operator O. For example, the information processing device 250 presents the image IMG to the remote operator O by displaying the image IMG on the display device 220. The remote operator O can recognize the state of the vehicle 100 and the surrounding situation based on the presented information.

The remote operator O operates the input device 230. The operation amount of the input device 230 is detected by a sensor installed in the input device 230. The information processing device 250 generates remote support information OPE reflecting the operation amount of the input device 230 by the remote operator O. Then, the information processing device 250 transmits the remote support information OPE to the vehicle 100 via the communication device 210.

The information processing device 250 may receive the camera information CINF transmitted from the vehicle 100. The camera information CINF is stored in the memory device 270.

The information processing device 250 performs the projection transformation processing (the movement adjustment processing) described in the above section 3 and the generation processing of the synthetic image described in the above section 2. The speed and steering angle of the vehicle 100 are obtained from information on sensor detection SEN. The steering angle in the steering operation by the remote operator O may be regarded as the steering angle of the vehicle 100. The installation information and the performance information on each camera CAM mounted on the vehicle 100 are obtained from the camera information CINF. The information processing device 250 executes the projection transformation processing (the movement adjustment processing) described in the above section 3 based on these pieces of information.

## Claims

1. A device (1) for remotely supporting a mobile vehicle (100), the device configured to remotely support the mobile vehicle by outputting a synthetic image (SIMG) in which annotation information (OR) about an object to be noted in an image (IMG) is superimposed on the image obtained by a camera (CAM) mounted on the mobile vehicle from a display device (220), the device comprising
a communication circuitry (210) connected to the mobile vehicle via a communication network; and
a processing circuitry (250) coupled to the communication circuitry,
wherein the communication circuitry is configured to:
receive, from the mobile vehicle, image data obtained by encoding the image and information on acquisition timing of the image by the camera; and
receive, from the mobile vehicle, object data including recognition information on an object in the image separately from the image data,
wherein the processing circuitry is configured to:
when the object is a moving body, predict a movement amount of the moving body at an object delay time indicating a timing difference between an acquisition timing of the image used for recognizing the moving body and a reception timing of the object data including recognition information on the moving body by the processing circuitry;
set an object movement adjustment time (α) which is monotonic non-decreasing with respect to an increase in the predicted movement amount of the moving body;
perform projection transformation of a partial image of the moving body, which is included in the image included in the image data and used for the recognition of the moving body, into a future image obtained at a camera viewpoint earlier than the acquisition timing of the image by the image delay compensation time based on information on a relative movement of the moving body with respect to the mobile vehicle; and
generate the synthetic image based on the future partial image, an original image in which an original partial image of the future partial image is included, and recognition information on the moving body in the original image.

2. The remote support device according to claim 1,
wherein the processing circuitry is configured to:
set the object delay time as the object movement adjustment time when the predicted movement amount is greater than a threshold movement amount; and
gradually increase the object movement adjustment time from a predetermined time to the object delay time in accordance with an increase in the predicted movement amount when the predicted movement amount is equal to or less than the threshold movement amount.

3. The remote support device according to claim 1,
wherein the processing circuitry is configured to generate the synthetic image based on the future partial image, an original image in which an original partial image of the future partial image is included, recognition information on the moving body in the original image, and the original partial image.

4. The remote support device according to claim 3,
wherein the processing circuitry is configured to output a color indicating the annotation information about the future partial image in the synthetic image in a color different from a color indicating the annotation information about the original partial image.

5. The remote support device according to claim 3,
wherein the processing circuitry is configured to superimpose, on the synthetic image, a graphic that associates the annotation information about the future partial image in the synthetic image with the annotation information about the original partial image.

6. A method for remotely supporting a mobile vehicle (100), the method including remotely supporting the mobile vehicle by outputting, from a display device (220), a synthetic image (SIMG) in which annotation information (OR) about an object to be noted in an image (IMG) is superimposed on the image obtained by a camera (CAM) mounted in the mobile vehicle,
wherein the method includes:
receiving from the mobile vehicle image data in which the image and information on acquisition timing of the image by the camera are encoded from the mobile vehicle;
receiving object data including recognition information on an object in the image from the mobile vehicle separately from the image data;
setting an object movement adjustment time (α) which is monotonic non-decreasing with respect to an increase in the predicted movement amount of the moving body;
performing projection transformation of a partial image of the moving body, which is included in the image included in the image data and used for the recognition of the moving body, into a future image obtained at a camera viewpoint earlier than the acquisition timing of the image by the image delay compensation time based on information on a relative movement of the moving body with respect to the mobile vehicle; and
generating the synthetic image based on the future partial image, an original image in which an original partial image of the future partial image is included, and recognition information on the moving body in the original image.
